# EUROPEAN PATENT APPLICATION

(11) **EP 4 844 131 A1**
(43) Date of publication of application: **25.11.2026**
(21) Application number: 25177422.0
(22) Date of filing: 19.05.2025
(51) Int. Cl.: E01C 11/00, B60L 53/12

(54) **ROADWAY SYSTEM FOR WIRELESS CHARGING OF ELECTRIC VEHICLES**

(71) Applicant: Sika Technology AG, 6340 Baar (CH)
(72) Inventor: USLU, Cenk, 70439 Stuttgart (DE); GÜNGÖR, Sengül, 70439 Stuttgart (DE); VIAS PARRADO, Ana, 70439 Stuttgart (DE); SARIOGLU, Oguz, 70439 Stuttgart (DE)
(74) Representative: Sika Patent Attorneys

(57) **Abstract**

The present invention relates to road electrification systems, and more particularly to a roadway system configured for wireless charging of electric vehicles. The system comprises an asphalt top layer, a base layer, and a wireless power transfer device secured to the base layer using an adhesive system. The configuration enables inductive charging of electric vehicles either while stationary or in motion, thereby enhancing charging efficiency and reducing reliance on traditional charging infrastructure. The invention provides improved integration and stability of charging components within the road structure, contributing to scalable deployment of electrified roadways.

## Description

### Technical field

The present invention pertains to the field of road electrification technologies, specifically to systems and methods for integrating and securing wireless power transfer components within road infrastructure. It enables wireless charging of electric vehicles (EVs) either while stationary or in motion, thereby reducing dependence on traditional EV charging stations. In particular, the invention relates to a roadway system that incorporates embedded charging elements beneath the asphalt layer, secured in place using adhesive systems.

### Background Art

The ongoing global shift toward electrified transportation has positioned electric vehicles (EVs) as a critical solution to reducing greenhouse gas emissions and decreasing dependence on fossil fuels. However, despite increasing consumer interest, the large-scale adoption of EVs remains hindered by limitations in charging infrastructure. A key set of challenges includes prolonged charging times, the limited availability of charging infrastructure, and the disruption caused by needing to stop a journey to recharge the vehicle.

To address limitations associated with conventional electric vehicle charging methods, the concept of roadway electrification has gained increasing interest. A key technology within this domain is wireless inductive charging, which enables energy transfer from primary coils embedded in the roadway infrastructure to secondary coils mounted on a vehicle. These systems typically operate via inductive power transfer, wherein transmitting coils or plates positioned beneath the road surface generate a magnetic field that induces an electric current in a receiving coil located on the underside of the vehicle. This configuration allows for battery charging while the vehicle is either stationary or in motion, thereby reducing dependence on fixed charging stations and potentially enabling the use of smaller onboard battery systems. Roadway-integrated wireless charging systems provide the benefit of both static and dynamic charging without requiring driver intervention.

For inductive charging systems to function reliably in real-world conditions, the charging components must be securely and permanently embedded in the roadway. These components, such as inductive plates or coils, are typically positioned beneath one or more layers of asphalt or concrete.

The installation method for securing charging components within road infrastructure typically involves embedding inductive elements, such as coils or plates, into pre-formed cavities or trenches in the road base. These components are fixed in place using adhesives, mechanical fasteners, or a combination of both. Adhesives are commonly applied between the charging component and the road base to ensure a stable and durable bond. Although these methods support integration with existing or new infrastructure, they remain vulnerable to long-term degradation.

Roadway systems are constantly exposed to a variety of forces, including the mechanical stresses generated by repeated vehicular loads, thermal expansion and contraction, freeze-thaw cycles, and moisture infiltration. These factors can weaken the bond between the charging components and the surrounding road material, leading to issues such as delamination, displacement, or degradation of the charging system. Additionally, exposure to harsh environmental conditions, such as extreme temperatures and humidity, can exacerbate the effects of these stresses, reducing the effectiveness of wireless power transfer and potentially jeopardizing road safety.

Furthermore, current systems are typically designed with limited consideration for the integration of dynamic (in-motion) charging, which is critical for maximizing the utility of roadway electrification. In-motion charging requires continuous alignment and stable energy transfer as vehicles travel over the embedded charging components. Achieving this alignment and ensuring reliable power transfer across varying speeds and road conditions presents a significant challenge to existing roadway systems.

Therefore, there is a need for an improved roadway system that integrates wireless inductive charging components in a more robust, efficient, and long-lasting manner. The system must address the challenges posed by mechanical stresses, environmental factors, and the dynamic nature of vehicle movement. Additionally, the integration process must ensure that the charging system can withstand the wear and tear associated with typical roadway environments while providing efficient and reliable energy transfer for electric vehicles.

### Summary of the invention

The objective of the present invention is to provide a roadway system for wireless charging of an electric vehicle. Another objective of the present invention is to provide a roadway system that enables inductive charging of electric vehicles (EVs) either while stationary or in motion, thereby reducing dependence on traditional EV charging stations.

In particular, the invention provides a roadway system that incorporates embedded charging devices beneath the asphalt layer, secured in place using adhesive systems.

The inventive roadway system of the present invention comprises an asphalt top layer; a base layer comprising asphalt, concrete, or a combination thereof; and at least one charging device **ED.** The charging device **ED** is adhered to the base layer using an adhesive **AB.** The adhesive **AB** has a viscosity of 6000 to 25000 mPas at a shear rate of 10 s⁻¹ and/or, preferably and, 3500-12000 mPas at a shear rate of 50 s⁻¹, the viscosity is measured at 23 °C by means of a plate-to-plate viscometer with a plate diameter of 50 mm, a plate-to-plate distance of 0.5 mm. The adhesive **AB** has a shear strength of at least 1.0 MPa, preferably at least 2 MPa, more preferably at least 5 MPa, even more preferably at least 8 MPa, in the cured state, as determined according to DIN EN 12004-2 (2017).

Another objective of the present invention is to provide a method for installing the roadway system, comprising the steps of (a) preparing a base layer of the roadway system; (b) applying an adhesive **AB** to at least a portion of the base layer, the charging device **ED,** or both; securing the charging device **ED** to the base layer; and covering the charging device **ED** with an asphalt top layer.

The subject of the present invention is a roadway system according to claim 1.

Other aspects of the present invention are presented in other independent claims. Preferred aspects of the invention are presented in the dependent claims.

### Brief Description of the Drawings

**Figure 1** illustrates photographic images of the test specimens prepared using the exemplary adhesive formulations, captured immediately after preparation, after 5 minutes, and after 60 minutes.
**Figure 2** depicts the photographic images of the cured test specimens prepared using the exemplified adhesive formulations (Ex 1 to Ex 7).
**Figure 3** illustrates photographic images showing the test results related to air bubble formation.
**Figure 4** illustrates photographic images showing the test set up for determining shear force.
**Figure 5** illustrates photographic images showing the test results related to shear force.

### Detailed description of the invention

The subject of the present invention is a roadway system for wireless charging of an electric vehicle, comprising:
a) an asphalt top layer;
b) a base layer comprising asphalt, concrete, or a combination thereof; and
c) at least one charging device **ED;** wherein the charging device **ED** is adhered to the base layer using an adhesive **AB,** wherein the adhesive **AB** has:
   i. a viscosity of 6000 to 25000 mPas at a shear rate of 10 s⁻¹ and/or, preferably and, 3500-12000 mPas at a shear rate of 50 s⁻¹, wherein the viscosity is measured at 23 °C by means of a plate-to-plate viscometer with a plate diameter of 50 mm and, a plate-to-plate distance of 0.5 mm; and
   ii. a shear strength of at least 1.0 MPa, preferably at least 2 MPa, more preferably at least 5 MPa, even more preferably at least 8 MPa, in the cured state, as determined according to DIN EN 12004-2 (2017).

### Definitions:

In the context of the present invention, the following definitions may apply to the terms listed below, unless specified otherwise:
The terms "a", "an", and "the" are typically interpreted broadly to cover both singular and plural instances of the invention, unless otherwise specified. This means that when these articles are used in a patent claim, they are generally understood to refer to the invention or a part of the invention, whether it is one thing or many things, unless the patent language clearly indicates otherwise.

The term 'about' refers to an approximation that allows for minor variations from a stated numerical value, parameter, or range, as would be understood by a person skilled in the art. Such variations account for measurement tolerances, experimental uncertainties, and normal manufacturing deviations, provided they do not materially affect the intended function or performance of the claimed invention.

The term "comprises" and variations thereof does not have a limiting meaning where such term appears in the description or claims.

The term "cementitious composition" refers to concrete, shotcrete, grout, mortar, paste or a combination thereof. The terms "paste", "mortar", "concrete", "shotcrete", and "grout" are well-known terms in the State-of-the-Art. Pastes are mixtures comprising a hydraulic cement binder, usually Portland cement, masonry cement, or mortar cement. Mortars are pastes additionally including fine aggregate, for example sand. Concrete are mortars additionally including coarse aggregate, for example crushed gravel or stone. Shotcrete is concrete (or sometimes mortar) conveyed through a hose and pneumatically projected at high velocity onto a surface. The cementitious compositions can be formed by mixing required amounts of certain components, for example, a hydratable cement, water, and fine and/or coarse aggregate, to produce the particular cementitious composition.

The expression "directly connected" is understood to mean in the context of the present invention that no further layer or substance is present between the layers, and that the opposing surfaces of the two layers are directly bonded to each other or adhere to each other. At the transition area between the two layers, the materials forming the layers can also be present mixed with each other.

The term "electric vehicle", as used herein, refers to any vehicle that is powered, in whole or in part, by one or more electric motors using electrical energy stored in onboard energy storage systems, such as batteries or capacitors. This includes fully electric vehicles (EVs), plug-in hybrid electric vehicles (PHEVs), and hybrid electric vehicles (HEVs). The term may also encompass vehicles designed for various modes of operation, including personal, commercial, public transport, and industrial applications, provided they utilize electric propulsion systems as a primary or auxiliary means of motion.

The word "exemplary" is used exclusively herein to mean "serving as an example, embodiment, or illustration." Any embodiment described herein as "exemplary" is not necessarily to be construed as superior or better than other embodiments.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The term "inductive charging", as used herein, refers to a method of wireless energy transfer in which electrical energy is transmitted from a power source to a receiving device through magnetic fields, typically via inductively coupled coils. This process involves a primary coil (transmitter) embedded in the infrastructure, such as a roadway, and a secondary coil (receiver) integrated into an electric vehicle. When alternating current flows through the primary coil, it generates a time-varying magnetic field that induces an electric current in the secondary coil, thereby charging the vehicle's onboard energy storage system without the need for direct physical connectors.

The term "melting temperature" refers to a temperature at which a material undergoes transition from the solid to the liquid state. The melting temperature (Tₘ) is preferably determined by differential scanning calorimetry (DSC) according to ISO 11357-3:2018 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

Substance names beginning with "poly", such as polyamine or polyepoxide, refer to substances containing, in a formal sense, two or more of the functional groups that occur in their name per molecule.

The term "polymer" refers to a substance containing more than 100 repeat units. The term "polymer" includes soluble and/or fusible molecules having long chains of repeat units and also includes insoluble and infusible networks. A prepolymer is a substance containing less than 100 repeat units and that can undergo further reaction to form a polymer.

The terms "preferred" and "preferably" refer to embodiments which may afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the invention.

The term "room temperature" refers to the temperature of 23°C.

The term "roadway system", as used herein, refers to the engineered infrastructure comprising one or more road surfaces and associated structural and functional components designed to support vehicular traffic. This includes, but is not limited to, the pavement layers (such as asphalt or concrete), substructures (base, sub-base, and subgrade), and auxiliary elements such as drainage mechanisms, signaling infrastructure, safety barriers, and embedded technologies. The roadway system may further include integrated wireless power transfer elements and associated securing means, facilitating the charging of electric vehicles while in motion or at rest.

The term "secured to" is generally understood to broadly encompass various methods of attaching, fixing, or anchoring one component to another in a stable and lasting manner. This includes mechanical fastening, such as the use of screws, bolts, nails, or clips; adhesive bonding, where materials are joined using glues, epoxies, cementitious compounds, or other bonding agents; thermal or chemical fusion, including techniques like heat welding or solvent bonding; and embedding or interlocking, where one component is partially or fully embedded into another, such as by casting, molding, or pressing it into place. The phrase is typically interpreted to include any technique that ensures the attached component remains in place during its intended use.

The term "thermoplastic" refers to any polymer material which can be melted and re-solidified with little or no change in physical properties.

The term "thixotropic agent" refers to a substance that imparts thixotropy to a material. Thixotropy is a property of certain gels or fluids that are thick (viscous) under static conditions but become less viscous (flow more easily) when shaken, stirred, or otherwise stressed, and then return to a more viscous state once the stress is removed.

The "thixotropic ratio" refers to a numerical measure of thixotropy, that is, how much a material's viscosity decreases under shear stress and recovers afterward. The thixotropic ratio is typically defined as: $Thixotropic Ratio = \frac{Viscosity at low shear rate}{Viscosity at high shear rate}$

A higher thixotropic ratio indicates that the material exhibits strong thixotropic behavior, meaning it experiences a significant reduction in viscosity when subjected to shear stress, such as stirring or pumping. This makes the material easier to spread or flow under force, but it will return to a thicker, more stable state when left undisturbed. Conversely, a lower thixotropic ratio, typically close to 1, suggests that the material has little to no thixotropic properties, as its viscosity remains relatively constant regardless of shear. In such cases, the material does not show a substantial change in thickness when agitated or allowed to rest.

"Molecular weight" refers to the molar mass (in grams per mole) of a molecule. "Mean molecular weight" is the number average M ₙ of a polydisperse mixture of oligomeric or polymeric molecules. It is determined by gel permeation chromatography (GPC) using polystyrene as a standard.

Percentages by weight (wt%) indicate the mass fraction of a component of a composition relative to the total composition, unless otherwise stated. The terms "mass" and "weight" are used synonymously in this document.

The term "polyurethane polymer" includes all polymers synthesized by the so-called diisocyanate polyaddition process. This also includes polymers that contain little or no urethane groups. Examples of polyurethane polymers include polyether polyurethane, polyester polyurethane, polyether polyurea, polyurea, polyester polyurea, polyisocyanurate, and polycarbodiimide.

The term "shear strength" refers to the maximum stress that a material can withstand in response to an applied force that causes the internal structure of the material to slide against itself along a plane. It is typically measured in units of pressure, such as Pascals (Pa) or pounds per square inch (psi) and is a critical parameter in determining the mechanical stability and performance of materials under load. In the context of the present invention, shear strength may pertain to the bonding interface, structural components, or other materials where resistance to shear forces is essential.

The term "storage-stable" refers to the property of a composition of being storable in a suitable container for several weeks to several months at room temperature, without significantly changing the application or use properties thereof due to storage.

The term "two-component adhesive", as used herein, refers to an adhesive system composed of two separate components, typically a resin (component A) and a hardener or curing agent (component B), that are stored independently and mixed immediately prior to application. Upon mixing, a chemical reaction occurs that initiates the curing process, resulting in a strong, durable bond between surfaces.

All industry standards and norms mentioned in this document refer to the versions valid at the time of filing the initial application.

Unless defined otherwise, all technical, scientific or other terms used herein have the same meaning as commonly understood by one of ordinary skill in the art to which the invention pertains.

In a first aspect, the present invention provides a roadway system for wireless charging of an electric vehicle.

The roadway system of the present invention comprises a multilayered structure, with the asphalt top layer functioning as the primary surface course or wearing course.

Asphalt roadways are commonly used in urban streets, highways, and various other transportation networks due to their relatively low cost, ease of installation, and ability to withstand the mechanical stresses of traffic and environmental conditions. Asphalt roadways are designed to provide a stable surface for vehicles, ensuring smooth driving and durability under heavy loads and varying weather conditions. They are generally flexible, which allows them to expand and contract with temperature changes, making them less prone to cracking compared to other materials like concrete. Additionally, asphalt is often used because it offers good skid resistance, is relatively quiet, and can be easily repaired and resurfaced.

### Asphalt Top Layer:

The roadway system of the present invention comprises an asphalt top layer.

In the roadway system of the present invention the asphalt top layer function as the primary surface course or wearing course. The asphalt top layer is engineered to withstand dynamic traffic loads and environmental stressors.

The asphalt top layer preferably comprises a bituminous binder combined with graded mineral aggregates. The asphalt top layer may be modified with polymers, fibers, or other additives to improve performance characteristics such as temperature susceptibility, tensile strength, and fatigue resistance. In certain embodiments, the asphalt top layer incorporates recycled materials to promote environmental sustainability without compromising mechanical performance.

The type of additives which can be used in the preparation of the asphalt top layer are well known to the person skilled in the art. Typically, the asphalt top layer comprises a blend of bitumen binder and graded aggregates to ensure optimal compaction, flexibility, and resistance to rutting and cracking.

The asphalt top layer is an uppermost layer, also referred to as an asphalt-based surface course or wearing course. The asphalt top layer, represents the road surface, which is in direct contact with vehicles. The asphalt top layer serves as the primary interface between vehicular traffic and the pavement and is engineered to provide a durable, skid-resistant, and weather-resistant surface capable of withstanding mechanical and environmental stresses.

The asphalt top layer is preferably made up from poured asphalt or rolled asphalt.

The asphalt compositions suitable for use in the present invention encompass those having a mixed product temperature ranging from approximately 100 °C to 240 °C. Preferred asphalt types include, but are not limited to, hot mix asphalt (HMA), warm mix asphalt (WMA), half-warm mix asphalt, and cold mix asphalt.

In some embodiments, the asphalt top layer or surface course may include specific formulations such as dense-graded HMA, stone mastic asphalt (SMA), or porous asphalt. Dense-graded HMA provides a balance of strength and flexibility, while SMA, comprising coarse aggregates and polymer-modified binder, offers enhanced rut resistance and durability. Porous asphalt mixtures are used to facilitate drainage and mitigate hydroplaning risk. Alternatively, Portland cement concrete (PCC) may be used for applications requiring rigid pavement solutions.

The asphalt may be poured or rolled. If the asphalt top layer is made up from rolled asphalt, then asphalt is preferably heated before application to a temperature of typically 140 ° C to 160 ° C and preferably rolled by means of a roll. The use of mastic asphalt and rolled asphalt as a road surface, flooring or for waterproofing is well known to those skilled in the art.

The thickness and composition of the asphalt top layer can be varied according to the expected traffic load, climatic region, and underlying support structure, thereby offering a customizable solution for a wide range of roadway applications. According to a preferred embodiment, the thickness of the asphalt top layer is in the range of 25 mm to 75 mm and can be adjusted to meet specific functional requirements. Mineral fillers, such as sand or fine gravel, are typically present in significant proportions to ensure compaction and mechanical strength.

According to a preferred embodiment, the asphalt top layer is applied using temperature-controlled paving equipment followed by compaction through steel or pneumatic rollers to achieve target density and surface characteristics.

Surface texture and skid resistance of the asphalt top layer may be controlled via aggregate selection, mix design, and finishing techniques. Proper drainage design, including cross-slope and texture, is implemented to prevent water accumulation and ensure road safety.

### Base Layer:

The roadway system of the present invention comprises a base layer that is applied directly onto a base structure.

The term "base structure", as used herein, refers to the foundational portion of a roadway, comprising multiple layers designed to provide structural support and load distribution for the roadway or pavement system. These layers typically include the subgrade, subbase, and base course. The subgrade is the native soil or improved soil prepared by compaction to achieve a desired level of strength and stability; it serves as the bottommost layer supporting the upper layers. Above the subgrade lies the subbase layer, which generally consists of granular materials such as crushed stone, gravel, or stabilized aggregates. The subbase functions to further distribute traffic loads, improve drainage, and provide frost protection. The uppermost layer within the base structure is the base course, which is composed of high-quality, well-graded aggregate material that offers enhanced load-bearing capacity and a stable platform for the pavement surface or base layer applied above. The combined properties and proper construction of these layers ensure durability, resistance to deformation, and effective performance of the roadway system over time.

The base layer, also known as the binder course, is a critical component of roadway structures that lies directly above the base structure and below the asphalt top layer (or wearing course).

The base layer comprises asphalt, concrete, or a combination thereof. According to a preferred embodiment, the base layer typically consists of a mixture of asphalt binder and aggregates (sand, gravel, crushed stone). The asphalt binder acts as a glue, binding the aggregate particles together. The aggregates are typically well-graded to ensure dense packing and durability.

The asphalt binder used in the base layer may include various types of bituminous materials, such as penetration-grade asphalt, polymer-modified asphalt, or asphalt emulsions. The specific selection of the type and grade of asphalt binder is within the knowledge of a person skilled in the art and is tailored according to the requirements of the roadway, anticipated traffic loads, and environmental conditions, thereby ensuring long-term stability and performance of the base layer.

According to a particularly preferred embodiment, the composition of the asphalt top layer and the base layer are identical.

The base layer is applied onto the prepared base structure using conventional paving techniques known to a person skilled in the art. Prior to application, the base structure is inspected and, if necessary, graded and compacted to achieve a uniform and stable surface. The materials comprising the base layer, including the asphalt binder and aggregates, are mixed at elevated temperatures to form a homogeneous hot mix asphalt (HMA) or prepared as a suitable bituminous stabilized mixture. The mixture is then transported to the roadway site and laid using mechanical paving equipment to ensure consistent thickness and density. Following placement, the base layer is compacted with rollers to achieve the specified density and surface smoothness, thereby enhancing the mechanical interlock of aggregate particles and adhesion of the binder. Proper compaction and curing of the base layer are helpful in preventing premature deformation and to promote long-term durability. The thickness of the applied base layer is determined based on roadway design parameters and traffic loading conditions.

The thickness of the base layer typically varies depending on traffic load, climate, and design requirements. For heavy traffic roads and highways, thicker binder courses are used to accommodate higher load stresses. The thickness is carefully determined through pavement design methods considering factors such as expected traffic loads, subgrade strength, and climatic conditions. Preferably, the thickness of the base layer ranges from 50 mm to 150 mm (2 to 6 inches).

### Charging device ED:

The roadway system of the present invention comprises a charging device **ED.**

The term "charging device", as used herein, refers to an integrated assembly configured to wirelessly transfer electrical energy to a compatible receiving unit, such as an electric vehicle, typically embedded within or associated with roadway infrastructure. The charging device generally comprises one or more power transmitters, including charging coils, power electronics for regulating and controlling the energy transmission, control circuits, and communication modules to facilitate efficient and safe operation.

A key component of the charging device is the "charging plate", also known as conductive plate, which serves as the physical substrate or housing within or upon which the charging coil is embedded or mounted. The charging plate is fabricated from conductive materials designed to support electromagnetic coupling and withstand mechanical stresses and environmental exposure typical of roadway conditions.

Together, the conductive plate and associated components operate to generate an electromagnetic field that enables inductive or resonant wireless power transfer, thereby facilitating dynamic or stationary charging of electric vehicles in a manner that ensures reliability, safety, and operational efficiency.

The charging device **ED** is preferably an electromagnetic energy transfer unit embedded within or positioned beneath the surface layer of the roadway, in particular asphalt top layer. It is configured to wirelessly transfer electrical energy to electric vehicles (EVs) either when stationary or in motion (dynamic charging), using inductive or resonant coupling technologies.

Preferably, the charging device **ED** is configured to transfer power to at least one electric vehicle, wherein power transfer occurs wirelessly when the electric vehicle is moving over or stationary above the charging device **ED.**

According to a preferred embodiment, the charging device **ED** comprises at least one charging coil for inductive charging of the electric vehicle.

According to a preferred embodiment, the charging device **ED** comprises at least one primary coil (transmitter coil), associated ferrite or magnetic core elements, a power control module, and optional communication interfaces for vehicle detection and energy management.

In certain embodiments, the charging device **ED** may also include thermal sensors, overvoltage protection circuits, and wireless communication modules (e.g., RFID or Bluetooth) to manage energy flow, ensure safe operation, and enable vehicle authentication.

In a particularly preferred embodiment, the charging device **ED** is implemented in the form of a conductive plate embedded within the roadway system of the present invention. In this configuration, the conductive plate functions as both a structural and a functional component of the charging device, incorporating one or more embedded charging coils along with associated conductive pathways required for wireless power transmission. As a result, the overall design of the charging device **ED** is streamlined, relying primarily on the conductive plate, thereby minimizing the need for separate components. The conductive plate is electrically connected to a roadside power supply system via underground cabling and power control units, allowing it to generate an electromagnetic field suitable for inductive charging. When an electric vehicle equipped with a compatible receiver coil passes over or remains stationary above the conductive plate, energy is wirelessly transferred from the plate to the vehicle's battery system. The conductive plate is preferably fabricated from durable, weather-resistant materials capable of withstanding vehicular loads and environmental exposure, while maintaining the necessary electromagnetic properties.

Suitable examples of the materials used for preparing the conductive plate are known to a person skilled in the art and may include, but are not limited to, metal alloys such as aluminum or copper, conductive composites, carbon-based materials, or other electrically conductive and structurally durable substances. The invention is not limited to any particular material used in the formation of the conductive plate, and any electrically conductive material possessing adequate mechanical strength, thermal stability, and environmental resistance may be employed, as would be understood by a person skilled in the art.

According to a preferred embodiment, the charging device **ED** may be housed or encapsulated within and protective casing. The protective casing may preferably be made from thermally stable, weather-resistant materials such as glass-filled polymers, composite enclosures, or sealed aluminum housings. The purpose of the protective casing is to ensure longevity under heavy traffic and adverse environmental conditions.

According to a preferred embodiment, the charging device **ED** further comprising a protection layer to protect the charging device **ED** from environmental damage, particularly humidity, preferably the protection layer encapsulates the charging device **ED.**

Suitable examples of the materials which can be used for preparing the protection layer, include but are not limited to, polyurethane-based resins, epoxy resins, silicone elastomers, polyurea, and acrylate-based polymers, preferably polyurethane based resins.

According to a particularly preferred embodiment, the protection layer is preferably a coating, more preferably a polyurethane coating.

According to an embodiment, the charging device **ED** has:
a) a thickness in the range of 1 to 4 cm, preferably from 1.5 to 2.5 cm;
b) a length in the range of 100 to 250 cm, preferably from 125 to 200 cm; and
c) a width in the range of 40 to 150 cm, preferably from 50 to 100 cm.

According to a preferred embodiment, the roadway system optionally comprises a sealing layer disposed over at least a portion of the charging device **ED** to protect against moisture and mechanical wear, preferably also to support the adhesion between the asphalt top layer and the charging device **ED.**

The sealing layer may comprise a resilient, wear-resistant material such as elastomeric compounds, bituminous asphalt with added polymers, epoxy-based coatings, polyurethane-based coatings, polyurea-based coatings or similar polymeric composites.

The sealing layer may be applied to the charging device **ED** via spraying, casting, troweling, or lamination.

The sealing layer covers at least a portion of the charging device **ED.** According to preferred embodiment, the sealing layer conform to the surface of the charging device **ED,** or may extend partially or fully across the width of the charging device **ED.** In a particularly, preferred embodiment, the sealing layer is removable or replaceable for inspection or maintenance purposes.

The thickness of the sealing layer may vary depending on the intended load-bearing capacity and environmental exposure, typically ranging from 1 mm to 20 mm.

According to an embodiment, the sealing layer may include embedded sensors for monitoring wear or integrity of the roadway system.

According to an embodiment, the roadway system optionally comprises one or more mechanical fasteners or anchors to secure the charging device **ED** to the base layer.

According to a particularly preferred embodiment, the roadway system of the present invention does not employ mechanical fasteners or anchors to secure the charging device **ED** to the base layer.

### Securing charging device ED to base layer using an adhesive AB:

The charging device **ED** is secured to the base layer using an adhesive **AB.**

The term "secured to the base layer" generally refers to the physical attachment or fixation of charging device **ED** onto a base layer in a stable and lasting manner. The charging device **ED** is secured, in particularly adhered, to the base layer using an adhesive.

The adhesive employed for securing the charging device **ED** the base layer aid in ensuring long-term reliability of the roadway system. The adhesive must exhibit specific rheological properties, particularly in terms of viscosity and thixotropy, to provide adequate bonding performance and accommodate the mechanical and environmental stresses encountered in roadway environments.

For instance, if the adhesive has too low a viscosity, it may flow excessively when applied to inclined or uneven surfaces. This can lead to displacement from the intended bonding zone, incomplete encapsulation of the charging component, and potential exposure of the substrate. Conversely, if the viscosity is too high, the adhesive may resist proper flow during application. This can result in poor surface conformity, entrapment of air pockets or air bubbles, and a reduction in bond strength.

The thixotropic behavior of the adhesive also plays a critical role in achieving desired rheological properties. This ensures that the adhesive remains in place after application while still allowing sufficient workability during placement to achieve uniform coverage and strong adhesion. The adhesive should exhibit thixotropic behavior, wherein its viscosity temporarily decreases under shear stress (such as during the pressing of the charging plate into position) and recovers once the stress is removed. This behavior facilitates uniform spreading and intimate surface contact during installation, while minimizing post-application sagging or movement prior to curing. Such properties are especially advantageous for conforming to rough or textured road base surfaces, maintaining precise positioning, and ensuring consistent mechanical performance across diverse environmental conditions.

Accordingly, it is essential to achieve a balanced adhesive formulation that supports both ease of installation and structural integrity over time.

Accordingly, the choice of suitable adhesive is critical to ensure durable, long-lasting adhesion under mechanical and environmental stresses, support efficient wireless power transfer, and remain compatible with conventional road construction materials and techniques.

The roadway system of the present invention employs an adhesive **AB** to secure the charging device **ED** to the base layer.

Suitable examples of the adhesive **AB** are the adhesives which have:
i. a viscosity of 6000 to 25000 mPas, preferably 9000 to 20000 mPas, more preferably 13000 to 18000 mPas, at a shear rate of 10 s⁻¹ and/or, preferably and, 3500-12000 mPas, preferably 5000-10000 mPas, more preferably 6000-9000 mPas, at a shear rate of 50 s⁻¹, wherein the viscosity is measured at 23 °C by means of a plate-to-plate viscometer with a plate diameter of 50 mm and, a plate-to-plate distance of 0.5 mm; and
ii. a shear strength of at least 1.0 MPa, preferably at least 2 MPa, more preferably at least 5 MPa, even more preferably at least 8 MPa, in the cured state, as determined according to DIN EN 12004-2 (2017).

Particularly, suitable examples of the adhesives **AB** are the adhesives which have a thixotropic index of at least 1.5, preferably 1.6 to 2.5, more preferably 1.8 to 2.1, wherein the thixotropic index being defined as the ratio of the viscosity at a shear rate of 10 s⁻¹ to the viscosity at a shear rate of 50 s⁻¹.

Preferably, the adhesive **AB** is selected from the group consisting of epoxy, polyurethane, acrylic and combinations thereof, preferably epoxy or polyurethane, more preferably epoxy.

Suitable examples of commercially available adhesive systems that may be used as adhesive **AB** in the roadway system of the present invention include, but are not limited to, polyurethane based adhesives such as Sikabond T-8 (by Sika AG), epoxy based adhesive such as Sikalastic P 122 (by Sika AG); and acrylic adhesives such Sika Ergodur Pronto Pro (by Sika AG).

According to a preferred embodiment, the adhesive **AB** comprises at least one thixotropic agent **T,** wherein the thixotropic agent **T** preferably contains fibers, preferably High-density polyethylene (HDPE) fibers.

Suitable examples of thixotropic agents which may be used in the present invention are not restricted to any particular type. Non-limiting examples include organoclays, fumed silica, modified cellulose derivatives, and synthetic polymers that exhibit shear-thinning behavior. These agents may be selected based on compatibility with the overall formulation, desired rheological properties, and application method. It will be understood by those skilled in the art that other thixotropic agents, whether now known or later developed, may also be employed without departing from the scope of the present invention.

Particularly suitable thixotropic agents **T** are those comprising high-density polyethylene (HDPE) fibers having a length in the range of 0.05 mm to 0.5 mm, preferably from 0.09 mm to 0.35 mm, and more preferably from 0.1 mm to 0.25 mm.

Particularly suitable thixotropic agents **T** are those comprising High-density polyethylene (HDPE) fibers having thickness of about 10 µm.

Preferably, the adhesive **AB** comprises the thixotropic agent **T** in the range of 1.5 to 7 wt%, preferably 2 to 7 wt %, more preferably 2 to 6 wt%, based on total weight percentage of the adhesive **AB.**

Preferably, the adhesive **AB** has a thixotropic index of at least 1.5, preferably 1.6 to 2.5, more preferably 1.8 to 2.1, wherein the thixotropic index being defined as the ratio of the viscosity at a shear rate of 10 s⁻¹ to the viscosity at a shear rate of 50 s⁻¹.

According to a preferred embodiment, the adhesive **AB** is a two component adhesive comprising a resin component A and a hardener component **B,** each of which is separately stable when stored and is mixed together before or during application.

Prior to the application, the two components (i.e. component **A** and Component **B)** are stored separately from each other and are mixed with one another only during or immediately prior to the application. The components are advantageously present in a packaging composed of two separate chambers.

The adhesive **AB** is preferably present in a package composed of a packaging having two separate chambers, which each contain one of the two components of the adhesive **AB.**

A suitable container for storing each component is in particular a drum, a hobbock, a bag, a bucket, a can, a cartridge or a tube.

For applications in large quantities, especially for applications in industrial production, advantageously, the two components are filled and stored in drums or hobbocks. During application, the components are pressed out by means of feed pumps, and metered addition takes place via lines of a mixing apparatus, such as those commonly used for two-component adhesives in industrial production.

The mixing is typically done via static mixers or by means of dynamic mixers. When mixing, care must be taken to ensure that the two components are mixed as homogeneously as possible.

According to a particularly preferred embodiment, the adhesive **AB** is epoxy.

According to a particularly preferred embodiment, the resin component **A** contains at least one liquid epoxy resin and the hardener component **B** contains at least one polyamine, preferably a polyamine with at least three amine hydrogens.

The resin component **A** preferably contains at least one epoxy liquid resin.

Preferred liquid epoxy resins are aromatic polyepoxides that are liquid at room temperature and have an average epoxy equivalent weight of 156 to 210 g/eq.

Particularly preferred is a bisphenol A diglycidyl ether, a bisphenol F diglycidyl ether and/or a bisphenol A/F diglycidyl ether, as are commercially available, for example, from Huntsman, Dow or Hexion.

Also particularly preferred is a bisphenol A diglycidyl ether obtained from the reaction of bisphenol A with bio-based epichlorohydrin. This enables particularly sustainable epoxy resin compositions.

Also particularly preferred are phenol- formaldehyde novolak glycidyl ethers, in particular with an average functionality of 2.3 to 3.

The resin component **A** preferably comprises at least one reactive diluent containing epoxy groups.

Suitable reactive diluents containing epoxy groups are, in particular, butanediol diglycidyl ether, hexanediol diglycidyl ether, trimethylolpropane triglycidyl ether, phenyl glycidyl ether, cresyl glycidyl ether, guaiacol glycidyl ether, 4-methoxyphenyl glycidyl ether, pn-butylphenyl glycidyl ether, p-tert-butylphenyl glycidyl ether, 4-nonylphenyl glycidyl ether, 4- dodecylphenyl glycidyl ether, vanillin glycidyl ether, cardanol glycidyl ether, benzyl glycidyl ether, allyl glycidyl ether, butyl glycidyl ether, hexyl glycidyl ether, 2-ethylhexyl glycidyl ether or glycidyl ethers of natural alcohols such as, in particular, C 8-10 or C 12-14 or C 13-15 alkyl glycidyl ethers.

Glycidyl ethers of natural alcohols, especially C 12-14 alkyl glycidyl ethers, are preferred. Such epoxy resin compositions are particularly easy to process.

The resin component **A** preferably comprises a content of epoxy group-containing reactive diluents of 5 to 30 parts by weight, in particular 10 to 25 parts by weight, based on 100 parts by weight of epoxy liquid resin.

If necessary, the resin component **A** also contains portions of solid epoxy resin.

The hardener component **B** of the epoxy resin composition preferably contains at least one polyamine with at least three amine hydrogens.

Particularly suitable are aliphatic, cycloaliphatic or arylaliphatic polyamines, in particular selected from the group consisting of 2,2(4),4-trimethylhexamethylenediamine (TMD), 1,2-diaminocyclohexane, isophoronediamine (IPDA), 1,3- bis(aminomethyl)cyclohexane, 1,4-bis(aminomethyl)cyclohexane, 2(4)-methyl-1,3-diaminocyclohexane, 2,5(2,6)-bis(aminomethyl)bicyclo[2.2.1]heptane (NBDA), bis(4-aminocyclohexyl)methane, 1,3-bis(aminomethyl)benzene (MXDA), N-benzyl-1,2-ethanediamine, N-furfuryl-1,2-ethanediamine, N-tetrahydrofurfuryl-1,2-ethanediamine, phenalkamines, polyoxypropylenediamines with an average molecular weight M ₙ of 200 to 500 g/mol, polyoxypropylenetriamines with an average molecular weight M ₙ of 300 to 500 g/mol, Triethylenetetramine (TETA), tetraethylenepentamine (TEPA), pentaethylenehexamine (PEHA), N,N'-bis(3-aminopropyl)ethylenediamine (N4-amine) and reaction products from the reductive alkylation of N4-amine, DETA and TETA with benzaldehyde and hydrogen .

Of these, preference is given to IPDA, 1,3- bis(aminomethyl)cyclohexane, MXDA, N-benzyl-1,2-ethanediamine, phenalkamines, polyoxypropylenediamines with an average molecular weight M ₙ of 200 to 300 g/mol, reaction products from the reductive alkylation of N4-amine, DETA or TETA with benzaldehyde and hydrogen, and mixtures of two or more of these polyamines.

Particularly preferred is IPDA, it imparts a high glass transition temperature to the cured composition and exhibits a low tendency to yellowing. Also particularly preferred is 1,3-bis(aminomethyl)cyclohexane, which enables particularly rapid curing and contributes to a notably low yellowing tendency in the cured composition.

MXDA is also particularly preferred. MXDA enables particularly rapid curing. N-benzyl-1,2-ethanediamine enables particularly good processability with good flow, rapid curing, and little tendency toward surface defects due to blushing during curing.

The epoxy resin composition may contain other components, in particular
- Accelerators such as 2,4,6-tris(dimethylaminomethyl)phenol, salicylic acid, calcium nitrate or phenol novolak resins,
- other amines, in particular adducts of the polyamines mentioned with mono-or diepoxides, N,N'-dibenzyl-1,2-ethanediamine, phenalkamides or aromatic polyamines,
- thinners, in particular thinners with a boiling point at atmospheric pressure of at least 200 °C, in particular benzyl alcohol, 2-phenoxyethanol, cardanol, styrenated phenol, diisopropylnaphthalene or isopropylbiphenyls,
- Fillers such as, in particular, bio-based granules, ground or precipitated calcium carbonate, which may be coated with fatty acid, in particular stearate, barite (barite), talc, quartz flour, quartz sand, silicon carbide, iron mica, dolomite, wollastonite, kaolin, mica (potassium aluminum silicate), titanium dioxide, iron oxides, molecular sieve, aluminum oxide, aluminum hydroxide, magnesium hydroxide, silica, or hollow spheres,
- Nanofillers, in particular carbon nanotubes;
- dyes or pigments ,
- solvents;
- Rheology modifiers, especially thickeners or anti-settling agents ,
- adhesion promoters, especially organoalkoxysilanes ,
- flame-retardant substances, in particular the fillers aluminium hydroxide or magnesium hydroxide already mentioned, or phosphates such as diphenyl cresyl phosphate,
- Additives such as wetting agents, flow agents, defoamers, deaerators, stabilizers against oxidation, heat, light or UV radiation, or biocides.

Such further components of the epoxy resin composition can be present as components of the resin and/or the hardener component, with accelerators and other amines preferably being present as components of the hardener component.

The epoxy resin composition preferably contains at least one accelerator, in particular 2,4,6-tris(dimethylaminomethyl)phenol.

The epoxy resin composition preferably contains at least one filler, in particular selected from bio-based granules, calcium carbonates, barite, talc and quartz flour, and at least one pigment, in particular a titanium dioxide.

The epoxy resin composition preferably contains at least one thinner.

The epoxy resin composition preferably contains at least one additive, in - particular selected from wetting agents, flow control agents, defoamers and deaerators.

Before or during application in step (i), the components of the epoxy resin composition are mixed together. In particular, the resin and hardener components are mixed together.

The mixing ratio of the components is preferably selected such that the ratio of the number of groups reactive toward epoxy groups, particularly amine hydrogens, to the number of epoxy groups is in the range of 0.5 to 1.5, preferably 0.7 to 1.2. In parts by weight, the mixing ratio between the resin and hardener components is typically in the range of approximately 1:1 to 10:1 .

The components can be mixed continuously or in batches, particularly at ambient temperature.

When the components are mixed, the epoxy resin composition begins to cure through a chemical reaction. Amine hydrogens react with epoxy groups, causing their ring opening (addition reaction). As a result of this reaction, the composition polymerizes and thus hardens.

The reaction resin mix has a flowable consistency at room temperature and is typically applied by being brushed on, sprayed on or poured onto the base layer. In particular by pouring it onto the base layer and then spreading it evenly using, for example, a brush, roller, squeegee, or notched trowel. It can also be applied by spraying.

It is to be noted that in this connection the term "flowable" denotes not only liquid but also highly viscous, honey-like to pasty materials whose shape is adapted under the influence of the gravitational force of the earth.

In another aspect, the invention relates to a method for installing the roadway system of the present invention, comprising the steps of:
i. preparing the base layer of the roadway system;
ii. applying the adhesive **AB** to at least a portion of the base layer, the charging device **ED,** or both, and securing the charging device **ED** to the base layer; and
iii. covering the charging device **ED** with the asphalt top layer.

In the step (i) the base layer suitable for installation of charging device **ED** is prepared. The preparation process may include leveling, grading, compaction, and application of primers or sealants, as needed, to ensure mechanical integrity and compatibility with subsequent materials or layers.

In step (ii), the adhesive **AB** is applied to at least a portion of the base layer, the charging device **ED,** or both. Following the application of adhesive **AB,** the charging device **ED** is positioned in the designated area and secured to the base layer in a manner that ensures its immobilization throughout its operational lifespan.

Preferably, the adhesive **AB** in step (ii) is applied in an amount of 0.2 to 3 kg/m ² , preferably 0.3 to 2 kg/m ².

Preferably, the adhesive **AB** in step (ii) is applied in a layer thickness of 0.1 to 3 mm, preferably 0.3 to 2 mm.

In the step (iii) the charging device **ED,** which is secured on the base layer is covered with the asphalt top layer. In some embodiments the additional materials and/or layers such as protective sheathing, insulative coatings, or waterproof barriers may optionally be included during or prior to asphalt application to enhance system durability.

According to a preferred embodiment, method for installing the roadway system of the present invention further comprises a step of applying a protection layer to the charging device **ED.**

According to a preferred embodiment, further comprises a step of applying a sealing layer to at least a portion of the charging device **ED.**

In another aspect, the invention relates to use of the roadway system of the present invention for charging one or more electric vehicles.

The roadway system is designed to facilitate wireless energy transfer from embedded charging device **ED,** such as inductive coils or conductive plates, positioned beneath or within the surface of the road, to a corresponding receiver mounted on the electric vehicle.

During operation, the electric vehicle may be stationary or in motion while traveling over the segment of the roadway system containing the charging device **ED.** As the vehicle passes over or stops on the designated charging zone, the system establishes an electromagnetic coupling between the charging device **ED** embedded in the roadway and the onboard receiver of the electric vehicle, enabling energy transfer for recharging the vehicle's battery.

The use of the system may include, but is not limited to, the charging of passenger cars, public transportation buses, delivery trucks, autonomous vehicles, or other battery-operated or hybrid-electric platforms. The system may be employed in a variety of settings, including urban roads, highways, parking areas, charging lanes, or dedicated transit corridors.

Such use may further incorporate communication protocols for vehicle identification, billing, or control of charging parameters, enabling secure and efficient energy transfer management.

Additionally, the system may be designed to operate under diverse environmental and load conditions, offering a robust and scalable solution for integration into existing or new transportation infrastructure.

### Examples

The following are exemplary embodiments intended to illustrate the described invention in more detail. Of course, the invention is not limited to these described exemplary embodiments.

**Table 1 depicts the details pertinent to the adhesive composition tested.**

| ***Composition Details : Adhesive AB*** | |
|---|---|
| ***Component A*** | |
| Bisphenol A epoxy resin (liquid) | 62 |
| Polyglycol diepoxide liquid resin | 18 |
| Toughening agent, polymer with ether and urethane groups, blocked isocvante groups | 10 |
| Benzyl alcohol | 5 |
| Air release agent (additive) | 0.15 |
| Thixotropic agent **T** *HD-polyethylene fibers, length 0.1-0.25 mm, thickness 10 µm, thixotropic agent (called T above), to be replaced with bisphenol A epoxy resin to get to 100 wt.-% | To be adjusted |
| Total wt.-% | 100 |

| ***Component B*** | |
|---|---|
| Adduct (reaction product) of Isophorondiamine and M-Xylylendiamine dissolved in benzyl alcohol with liquid bisphenol A epoxy resin | 63 |
| Isophorondiamine | 14 |
| M-Xylylendiamine (MXDA) | 18 |
| Tris-(dimethylaminomethyl) phenol | 5 |
| Total wt.-% | 100 |

| | |
|---|---|
| **please note that any type of thixotropic agent could be used* | |

Viscosity measurements were carried out using a plate-plate viscometer equipped with a 50 mm diameter plate and a plate separation distance of 0.5 mm. The measurements were conducted at a shear rate of 10 s⁻¹ or 50 s⁻¹ at a temperature of 23°C. The adhesive composition, comprising components **A** and **B,** was mixed for a duration of 1 minute prior to the viscosity determination.

**Table 2 illustrates the specific composition parameters and measured viscosity values of the exemplified adhesive compositions.**

| **Example** | **Amount T in Component A** | **MV A:B** | **Amount T in AB** | **Mix visco 10 1/s** | **Mix visco 50 1/s** | **Thixotropic Index** |
|---|---|---|---|---|---|---|
| Ex 1 | 0% | 75:25 | 0 | 1290 | 1295 | 1.0 |
| Ex 2 | 2% | 75:25 | 1.5% | 3989 | 2833 | 1.4 |
| Ex 3 | 3% | 75:25 | 2.25% | 6623 | 3996 | 1.7 |
| Ex 4 | 4% | 76:24 | 3.04% | 10492 | 5774 | 1.8 |
| Ex 5 | 5% | 76:24 | 3.8% | 14050 | 7181 | 2.0 |
| Ex 6 | 6% | 76:24 | 4.56% | 16276 | 7910 | 2.1 |
| Ex.7 | 7% | 76:24 | 5.32% | 24494 | 11404 | 2.2 |
| Ex 8 | 8% | 76:24 | 6.08% | nd* | nd* | - |

| | | | | | | |
|---|---|---|---|---|---|---|
| *nd*: - not determined too high* *50g AB mixed at 23°C by hand and applied directly to surface of substrate* | | | | | | |

In Example 1, wherein the adhesive **AB** does not contain additive **T,** the measured viscosity values at shear rates of 10 s⁻¹ and 50 s⁻¹ are approximately equal (i.e., 1290 mPas and 1295 mPas, respectively), thereby indicating the absence of thixotropic behavior in the composition.

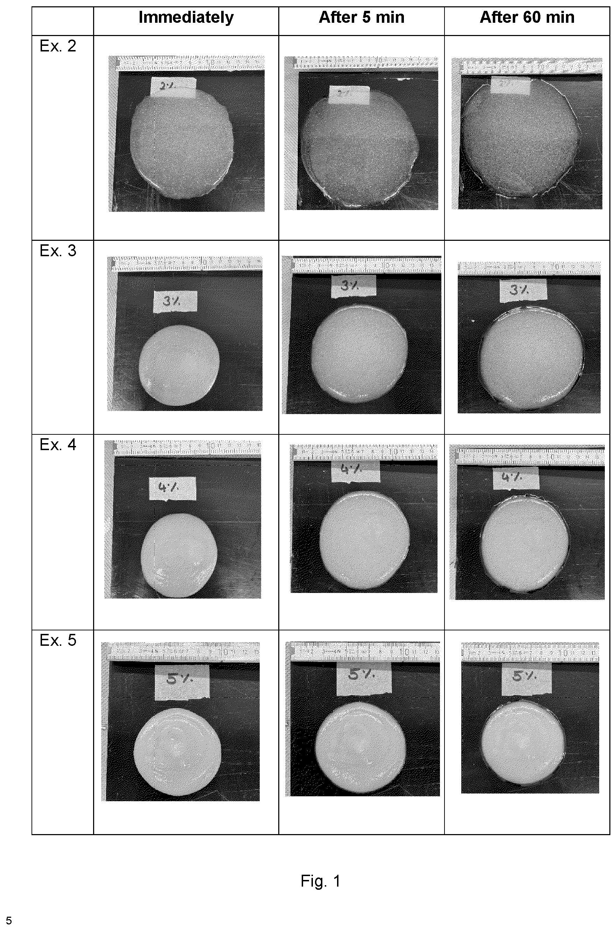

**Figure 1** illustrates photographic images of the test specimens prepared using the exemplary adhesive formulations, captured immediately after preparation, after 5 minutes, and after 60 minutes.

Test specimens were prepared by manually mixing 50 grams of adhesive composition AB at a temperature of 23°C, followed by immediate application of the mixture to the surface of the substrate.

Photographic images of the test specimens prepared in accordance with Examples 1 to 5, captured immediately after preparation, as well as after 5 minutes and 60 minutes, are presented in **Figure 1****.**

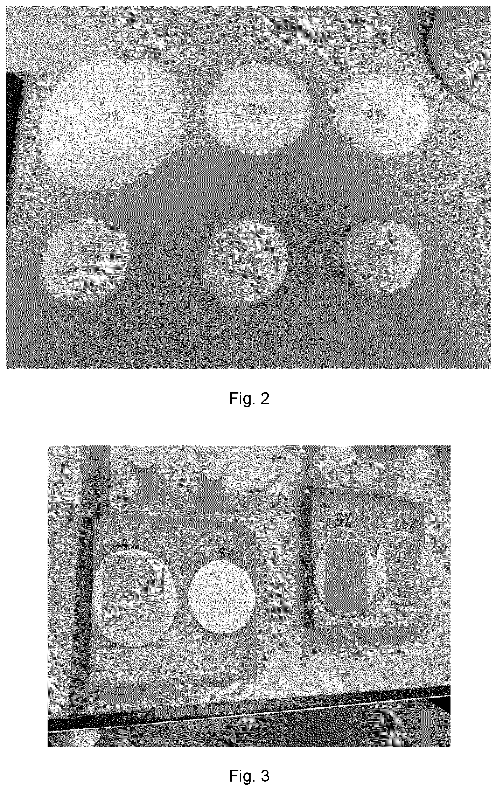

**Figure 2** depicts the photographic images of the cured test specimens prepared using the exemplified adhesive formulations (Ex 2 to Ex 7).

It has been observed that in Reference Example 2, wherein the adhesive composition **AB** comprises 2 wt% of additive **T,** the measured viscosity values (4000 mPas at a shear rate of 10 s⁻¹ and 2800 mPas at a shear rate of 50 s⁻¹) are undesirably low, indicating excessive material flow under shear.

It has been observed that in Example 8, wherein the adhesive composition **AB** comprises 8 wt% of additive **T,** the viscosity measurements were not possible.

Also, it has been observed that in example 3-7, wherein the adhesive **AB** comprises 3-7 wt% of **T.** The compositions depict excellent rheological behavior, as required in the demanding applications of the present invention.

**Figure 3** illustrates photographic images showing the test results related to air bubble formation.

The adhesive formulations exemplified in Examples 5 through 8 were applied to a concrete substrate and subsequently pressed using a glass plate to evaluate air entrapment characteristics. In Examples 7 and 8, the presence of bubbles or entrapped air pockets was observed. Notably, Example 8 exhibited numerous large bubbles, indicating significant air entrapment.

In contrast, no bubble formation was observed in Examples 5 and 6 under identical testing conditions, demonstrating superior air release properties in those formulations.

Based on the above tests conducted it has been observed that example 6, wherein the adhesive **AB** comprises 6 wt% of additive **T,** depicts excellent rheological and functional properties.

### Shear Strength Testing:

The shear testing was conducted to estimate the shear strength based on the DIN EN 12004-2 on bonded joints of a conductivity plate on road asphalt.

### Test Procedure

The test was conducted in based on DIN EN 12004-2, Section 8.5, determination of the bond shear strength of reactive resin adhesives, with the specifications as described in Table 3.

Substrate: Rolled road asphalt cut to 150 x 120 mm.

Conductive plates: Cut to approximately 100 x 100 mm using a wet diamond saw, washed with water, and dried. Contrary to the standard, the conductive plate was not bonded protruding from the substrate and not in a point-like manner.

### Test procedure:

A contact layer was scratched onto the substrate using the respective adhesive, and an excess of adhesive was applied. A small amount of adhesive was also applied to the conductive plate. The conductive plate was placed on top and pressed down so that the excess adhesive was squeezed out, leaving approximately 2 to 3 mm of adhesive bed. Any excess adhesive on the outside was removed. The test specimens were stored for 7 days at 23 °C and 50% relative humidity.

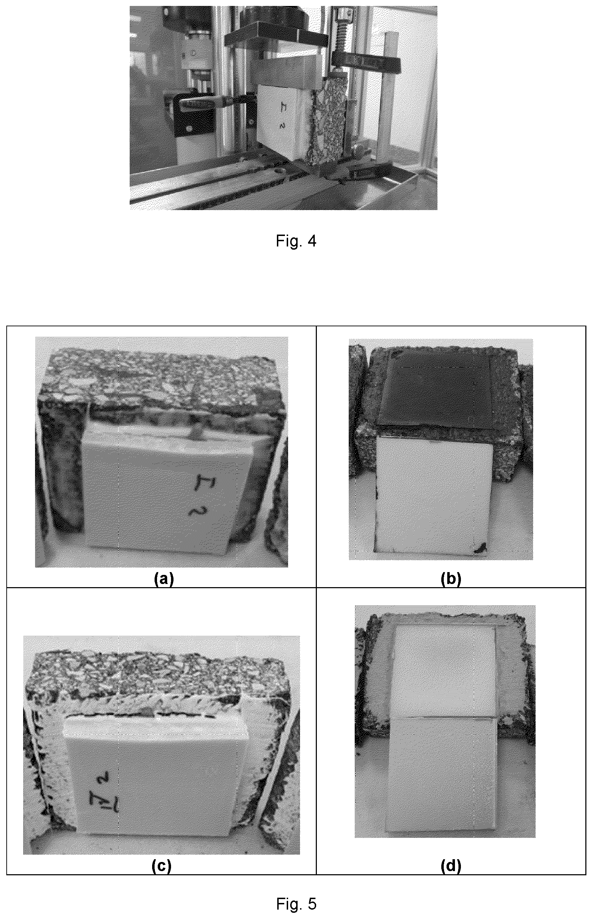

**Figure 4** illustrates photographic images showing the test set up for determining shear force

Test Setup: The asphalt slab was fixed within the testing apparatus using screw clamps to ensure stable positioning. A shear force was applied to the conductivity plate by means of a steel profile, enabling evaluation of the mechanical response under shear loading conditions.

During the test, the asphalt slab was fixed vertically in the testing machine. The shear force was applied to the conductivity plate using a steel profile. The test speed was 0.1 MPa/s.

**Table 3 depicts the shear strength values of the tested prototypes.**

| **Material** | **Sample-Nr.** | **Bonded surface in mm** | **Detached surface in mm** | **Breaking strenght in Kn** | **Shear strength* in Mpa** | **Fracture pattern** |
|---|---|---|---|---|---|---|
| Ex. 6 | 1 | 103x100 | 10x103 | 8,9 | 8,6 | KI/Lp |
| | 2 | 100x100 | 12x60 | 10,3 | 14,3 | Lp |
| Pecimor DK | 1 | 96x99 | 96x99 | 2,1 | 0,22 | KI/Lp |
| | 2 | 96x100 | 96x100 | 2,2 | 0,26 | KI/Lp |
| | 3 | 96x98 | 96x98 | 2,5 | 0,23 | KI/Lp |
| Flexmörtel S2 | 1 | 97x100 | 97x100 | 2,8 | 0,28 | KI/Lp |
| | 2 | 103x98 | 103x98 | 3,5 | 0,35 | KI/Lp |
| | 3 | 98x97 | 98x97 | 4,1 | 0,43 | KI/Lp |
| IV T-8 | 1 | 95x98 | 28x98 | 5,8 | 2,11 | A-O |
| | 2 | 98x100 | 22x83 | 4,6 | 2,51 | A-O |
| | 3 | 98x97 | 26x98 | 5,6 | 2,20 | A-O |

| | | | | | | |
|---|---|---|---|---|---|---|
| **Based on bonded or detached area, the latter was measured with the depth gauge of a caliper Kl*/*Lp fracture between adhesive and conductive plate Lp fracture in the conductive plate in the area of the copper conductors A-O fracture in the asphalt surface. A thin layer of asphalt remains on the adhesive.* | | | | | | |

### Assessment

Under the described test conditions, the shear strength could only be determined for the Pecimor DK (PCI, Germany) and cementitious tile adhesive (Flexmörtel S2, PCI Germany). With the epoxy adhesive and PU sealing adhesive, the conductive board was virtually impossible to shear. In this case, the conductive board was compressed at a certain force, leading to partial peeling.

**Figure 5** illustrates photographic images showing the test results related to shear force.

As observed in **Figure 5(a)****,** in the case of example 6, the conductive plates exhibited partial delamination from the adhesive layer on two occasions and experienced tearing at one location, predominantly in the region corresponding to the copper conductors. The affected areas were maintained in an open state using tiling wedges.

As observed in **Figure 5(b)****,** in the case of PCI Pecimor DK, the conductive plates have detatched from the adhesive.

As observed in **Figure 5(c)****,** in the case of SikaBond T-8, The fracture occurred in the area of force application, primarily in the asphalt surface. Thin asphalt residues remain on the adhesive.

As observed in **Figure 5(d)****,** in the case of PCI Flexmörtel S2, the conductive plates became detached from the adhesive layer. Only minor residues of the adhesive remained adhered to the surfaces of the conductive plates.

## Claims

1. A roadway system for wireless charging of an electric vehicle, comprising:
a) an asphalt top layer;
b) a base layer comprising asphalt, concrete, or a combination thereof; and
c) at least one charging device **ED;** wherein the charging device **ED** is secured to the base layer using an adhesive **AB,** wherein the adhesive **AB** has:
i. a viscosity of 6000 to 25000 mPas at a shear rate of 10 s⁻¹ and/or, preferably and, 3500-12000 mPas at a shear rate of 50 s⁻¹, wherein the viscosity is measured at 23 °C by means of a plate-to-plate viscometer with a plate diameter of 50 mm and, a plate-to-plate distance of 0.5 mm; and
ii. a shear strength of at least 1.0 MPa, preferably at least 2 MPa, more preferably at least 5 MPa, even more preferably at least 8 MPa, in the cured state, as determined according to DIN EN 12004-2 (2017).

2. The roadway system of claim 1, wherein the adhesive **AB** has a thixotropic index of at least 1.5, preferably 1.6 to 2.5, more preferably 1.8 to 2.1, wherein the thixotropic index being defined as the ratio of the viscosity at a shear rate of 10 s⁻¹ to the viscosity at a shear rate of 50 s⁻¹.

3. The roadway system of any of the preceding claims, wherein the adhesive **AB** is selected from the group consisting of epoxy, polyurethane, acrylic and combinations thereof, preferably epoxy or polyurethane, more preferably epoxy.

4. The roadway system of any of the preceding claims, wherein the adhesive **AB** comprises at least one thixotropic agent **T,** wherein the thixotropic agent T preferably contains fibers, preferably High-density polyethylene (HDPE) fibers.

5. The roadway system of any of the preceding claims, wherein the adhesive **AB** comprises the thixotropic agent **T** in the range of 1.5 to 7 wt%, preferably 2 to 7 wt %, more preferably 2 to 6 wt%, based on total weight percentage of the adhesive **AB.**

6. The roadway system of any of the preceding claims, wherein the adhesive **AB** is a two component adhesive comprising a resin component **A** and a hardener component **B,** each of which is separately stable when stored and are mixed together before or during application.

7. The roadway system of claim 6, wherein the resin component **A** contains at least one liquid epoxy resin and the hardener component **B** contains at least one polyamine, preferably a polyamine with at least three amine hydrogens.

8. The roadway system of any of the preceding claims, wherein the charging device **ED** is configured to transfer power to at least one electric vehicle, wherein power transfer occurs wirelessly when the electric vehicle is moving over or stationary above the charging device **ED.**

9. The roadway system of any of the preceding claims, wherein the charging device **ED** comprises at least one charging coil for inductive charging of the electric vehicle.

10. The roadway system of any of the preceding claims, further comprising a protection layer to protect the charging device **ED** from environmental damage, particularly humidity, preferably the protection layer encapsulates the charging device **ED.**

11. The roadway system of claim 10, wherein the protection layer is preferably a coating, more preferably a polyurethane coating.

12. The roadway system of any of the preceding claims, wherein the roadway system optionally comprises a sealing layer disposed over at least a portion of the charging device **ED** to protect against moisture and mechanical wear.

13. The roadway system of any of the preceding claims, wherein the charging device ED has:
i. a thickness in the range of 1 to 4 cm, preferably from 1.5 to 2.5 cm;
ii. a length in the range of 100 to 250 cm, preferably from 125 to 200 cm; and
iii. a width in the range of 40 to 150 cm, preferably from 50 to 100 cm.

14. The roadway system of any of the preceding claims, wherein the roadway system optionally comprises one or more mechanical fasteners or anchors to secure the charging device **ED** to the base layer.

15. A method for installing the roadway system of any of the preceding claims, comprising the steps of:
a) preparing the base layer of the roadway system;
b) applying the adhesive **AB** to at least a portion of the base layer, the charging device **ED,** or both, and securing the charging device **ED** to the base layer; and
c) covering the charging device **ED** with the asphalt top layer.

16. The method of claim 15, further comprises a step of applying a protection layer to the charging device **ED.**

17. The method of claim 15 or 16, further comprises a step of applying a sealing layer to at least a portion of the charging device **ED.**

18. Use of the roadway system of claim 1 to 14 for charging one or more electric vehicles.
